# EUROPEAN PATENT APPLICATION

(11) **EP 2 611 168 A2**
(43) Date of publication of application: **03.07.2013**
(21) Application number: 13161628.6
(22) Date of filing: 27.10.2009
(51) Int. Cl.: H04N 13/00, H04N 13/04

(54) **2D/3D display system and control method of the 2D/3D display system**

(30) Priority: 17.02.2009 KR 20090012680
(62) Divisional of application: 09174131.4
(71) Applicant: Samsung Electronics Co., Ltd, Gyeonggi-do 443-742 (KR)
(72) Inventor: Kim, Young-kook, Gyeonggi-do (KR)
(74) Representative: Grootscholten, Johannes A.M.

(57) **Abstract**

The present invention relates to a display system, comprising: shutter glasses (30) for selectively opening or closing a left eye part or a right eye part in synchronization with a display period of the image in a case that the image is a 3D image, and
a display apparatus (10), comprising:
an image receiving unit (200), which receives the image signal from an external source (20);
a controller (700), which determines whether the image signal corresponds to a two-dimensional (2D) image or a three-dimensional (3D) image, and adjusts, if it is determined that the image signal corresponds to the 3D image, a brightness level of an image to be displayed according to the image signal differently from a brightness level corresponding to the 2D image,

According to the invention, the controller (700) controls the display unit (100) to display a menu through which at least one of the brightness level corresponding to the 2D image and the brightness level corresponding to the 3D image can be selected. The present invention also relates to a corresponding method of controlling a display system.

## Description

### 1. Field of Invention

Apparatuses and methods consistent with the present invention relate to a display system which can display a two-dimensional (2D) image or a three-dimensional (3D) image, and more particularly to, a display system and a display apparatus which includes a shutter glass unit for a 3D image, and a control method of the display apparatus.

### 2. Description of Related Art

In general, a display apparatus processes an image signal inputted from an image source to display an image through a display panel such as a liquid crystal display (LCD) panel. To display the image through the display panel, the display apparatus scans scanning lines including image information onto the display panel. By means of the scanning lines scanned on the display panel, a single image frame is displayed.

An image to be displayed by the display apparatus may be classified into a 2D image and a 3D image. The 3D image includes a left-eye image and a right-eye image, which are alternately displayed on the display panel. The display apparatus is provided with a shutter glass unit for selectively opening and closing a left eye part or a right eye part of the shutter glass unit. The shutter glass unit operates to display the 3D image so that the user can perceive the stereoscopic 3D image.

In the case of a 2D image having no left-eye image and right-eye image, the shutter glass unit does not operate and the left eye part and the right eye part of the shutter glass unit remain open.

In other words, in such a display apparatus, the shutter glass unit selectively opens and closes at least one of the left eye part and the right eye part of the shutter glass unit according to whether the 2D image or the 3D image is to be displayed.

The disclosure in WO-01/97531 is acknowledged here as prior art from which specific elements and components, or steps and measures from the appended independent claims are known and relative to which at least the features are new in relation to distinction between 2D and 3D images based on a frequency of an extracted horizontal synchronous signal.

The foregoing and/or other aspects of the present invention can be achieved by providing a display apparatus according to the appended independent apparatus claim.

The brightness level corresponding to the 3D image may be set higher than the brightness level corresponding to the 2D image.

The controller may control the display unit to display a menu through which at least one of the brightness levels corresponding to the 2D image and the 3D image can be selected and stores the brightness level selected through the menu.

The display unit may include a display panel and a backlight unit which provides light for displaying the image on the display panel, wherein the controller controls the backlight unit to adjust the intensity or amount of the light corresponding to the adjusted brightness level.

The controller may adjust an RGB gain of the input image signal corresponding to the adjusted brightness level and controls the image processing unit to process the adjusted image signal.

The foregoing and/or other aspects of the present invention can be achieved by providing a control method of a display apparatus according to the appended independent method claim.

The method may further include storing the brightness level corresponding to the 3D image set higher than the brightness level corresponding to the 2D image.

The brightness level storing may include: displaying a menu through which at least one of the brightness levels corresponding to the 2D image and the 3D image can be selected; and storing the brightness level selected through the menu.

The brightness level adjusting may include: providing light from a backlight unit to a display panel on which an image is to be displayed; and adjusting the intensity or amount of the provided light corresponding to the adjusted brightness level.

The brightness level adjusting may include: adjusting an RGB gain of the input image signal corresponding to the adjusted brightness level; and displaying an image corresponding to the adjusted image signal.

The foregoing and/or other aspects of the present invention can be achieved by providing a display system according to the appended independent system claim.

The present invention will become apparent and more readily appreciated from the following description of the exemplary embodiments, taken in conjunction with the accompanying drawings, in which:
FIG. 1 is a schematic diagram illustrating a display system according to an exemplary embodiment of the present invention;
FIG. 2 is a block diagram illustrating the display system in FIG. 1, according to an exemplary embodiment of the present invention;
FIG. 3 show graphs illustrating a vertical synchronous signal for an image signal inputted to a display apparatus in FIG. 1 and a synchronous signal for opening/closing a shutter glass unit, according to an exemplary embodiment of the present invention;
FIG. 4 illustrates a menu for selecting a brightness level in the display apparatus in FIG. 1, according to an exemplary embodiment of the present invention;
FIG. 5 is a flowchart illustrating a control method of a display apparatus according to an exemplary embodiment of the present invention;
FIG. 6 is a flowchart illustrating a method of displaying an image according to a brightness level selected in a display apparatus according to an exemplary embodiment of the present invention; and
FIG. 7 is a flowchart illustrating a method of displaying an image according to a brightness level selected in a display apparatus according to another exemplary embodiment of the present invention.

Reference will now be made in detail to exemplary embodiments of the present invention, examples of which are illustrated in the accompanying drawings, wherein like reference numerals refer to like elements throughout. The exemplary embodiments are described below so as to explain the present invention by referring to the figures. Redundant description to different embodiments may be omitted for simplicity of description.

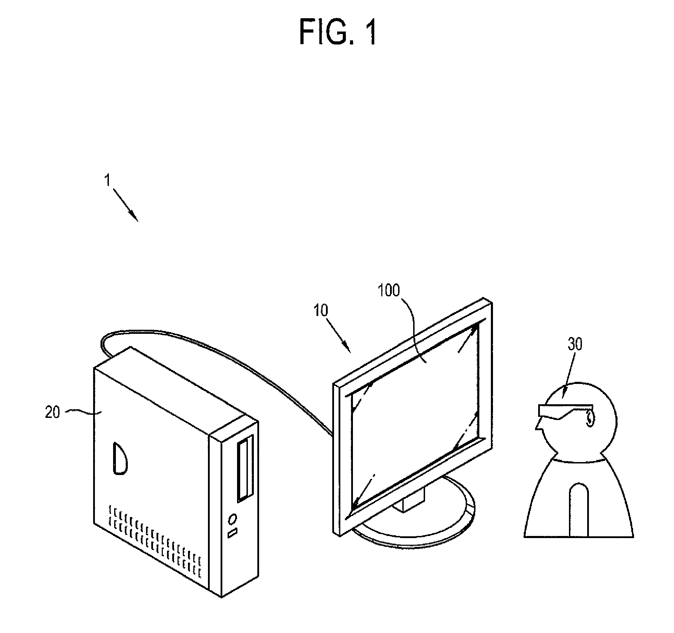

FIG. 1 schematically illustrates a display system 1 according to an exemplary embodiment of the present invention.

As shown in FIG. 1, the display system 1 includes a display apparatus 10 which includes a display unit 100 and processes an input image signal for display; an image source 20 which supplies the image signal to the display apparatus 10; and a shutter glass unit 30 which operates when a three-dimensional (3D) image is displayed through the display unit 100.

The display apparatus 10 may be embodied as a television, a monitor connected to a computer, or the like. The display apparatus 10 processes an image signal corresponding to a two-dimensional (2D) image or a 3D image inputted from the image source 20 to display an image through the display unit 100. As described above, a 3D image includes a left-eye image and a right-eye image, but a 2D image does not include left-eye and right-eye images.

In the case of a 3D image, the display apparatus 10 alternately displays a left-eye image and a right-eye image in a frame unit.

The image source 20 generates an image signal or receives the image signal from the outside and supplies the image signal to the display apparatus 10. The image source 20 may include a computer which generates an image signal with a central processing unit (CPU) and a graphic card and provides the image signal to a local terminal, a server which provides an image signal through network, a transmitter of a broadcasting station which transmits a broadcast signal through sky wave or a cable, or the like.

The shutter glass unit 30 is put on the left and right eyes of a user, and selectively operates corresponding to whether an image to be displayed through the display apparatus 10 is a 2D image or a 3D image.

The shutter glass unit 30 does not operate when an image to be displayed through the display unit 100 is a 2D image. In this case, the left and right eyes of the user are open from the shutter glass unit 30.

If a 3D image is to be displayed through the display unit 100, the shutter glass unit 30 selectively opens or closes the left eye part or the right eye part of the shutter glass unit 30 corresponding to whether a left-eye image or a right-eye image is to be displayed. That is, if a left-eye image is to be displayed through the display unit 100, the shutter glass unit 30 opens the left eye part and closes the right eye part. Contrarily, if a right-eye image is to be displayed through the display unit 100, the shutter glass unit 30 opens the right eye part and closes the left eye part.

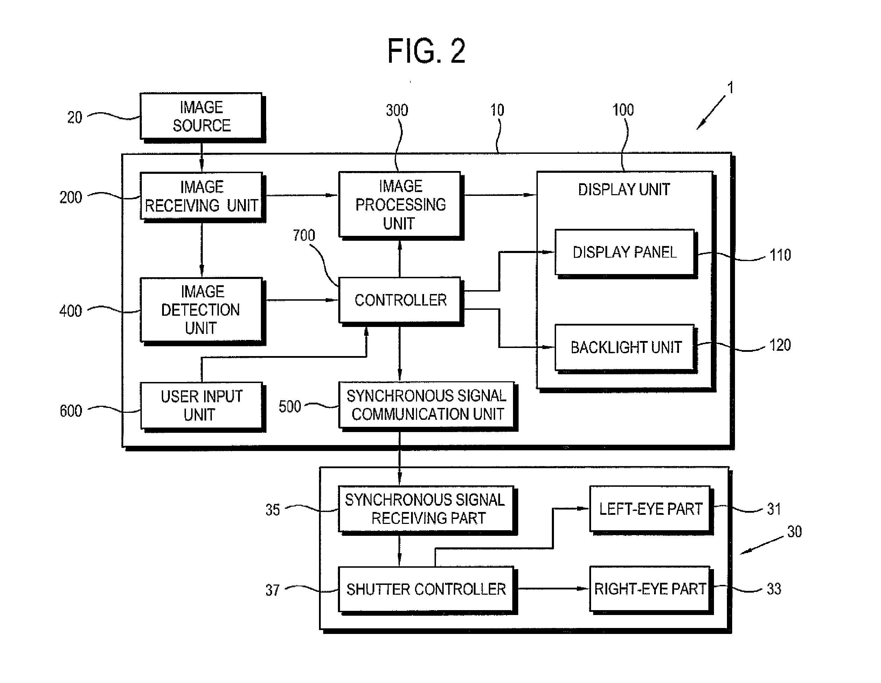

Hereinafter, the display apparatus 10 and the shutter glass unit 30 will be described in more detail with reference to FIG. 2.

As shown in FIG. 2, the display apparatus 10 includes the display unit 100, an image processing unit 300 which processes an image signal inputted from the image source 20 for display through the display unit 100, and a controller 700 which controls the image processing unit 300 or the display unit 100 to display an image at a given brightness level corresponding to a characteristic of the input image signal.

The display apparatus 10 further includes an image receiving unit 200 which receives the image signal from the image source 20, an image detection unit 400 which detects the characteristic of the image signal received through the image receiving unit 200, a synchronous signal communication unit 500 which transmits a synchronous signal corresponding to a display period of the image signal processed by the image processing unit 300 to the shutter glass unit 30, and a user input unit 600 which transmits an input command preset according to manipulation of a user to the controller 700.

The shutter glass unit 30 includes a synchronous signal receiving part 35 which receives the synchronous signal from the synchronous signal communication unit 500, a left-eye part 31 and a right-eye part 33 for entrance and exit of light, and a shutter controller 37 which selectively opens and closes the left-eye part 31 and the right-eye part 33 corresponding to the synchronous signal received through the synchronous signal receiving unit 35.

With this configuration, the display apparatus 100 sets a first brightness level corresponding to a 2D image and a second brightness level corresponding to a 3D image and different from the first brightness level. The display apparatus 10 detects the characteristic of the image signal inputted from the image source 20, and displays an image at the first brightness level if the input image signal corresponds to a 2D image, and at the second brightness level if the input image signal corresponds to a 3D image.

That is, the display apparatus 10 determines whether the input image signal corresponds to a 2D image or the 3D image to adjust the brightness level of an image to be displayed, thereby displaying the image at different brightness levels corresponding to the characteristic of the image signal.

The display unit 100 displays the image signal processed by the image processing unit 300 as an image. The display unit 100 may be embodied as a liquid crystal display (LCD), plasma display panel (PDP), light emitting diode (LED) display, organic LED (OLED) display, surface-conduction electron-emitter, carbon nano-tube display, nano-crystal display, or the like.

In the case of the LCD, the display unit 100 includes a display panel 110 on which an image is displayed, and a backlight unit 120 which provides light to the display panel 110.

The display panel 110 is embodied as a thin film transistor liquid crystal display (TFT-LCD) in which liquid crystal is filled between an amorphous upper substrate and a lower substrate. In such a display panel 110, arrangement of liquid crystal molecules varies due to voltage difference between the upper and lower substrates, which may determine the brightness level of an image.

The backlight unit 120 includes a light source (not shown) for generating light for supply to the display panel 110. The brightness of the image displayed on the display panel 110 may be determined according to the amount or intensity of the light provided from the backlight unit 120.

The image receiving unit 200 receives the image signal provided from the image source 20 via wired or wireless communication and transmits the received image signal to the image processing unit 300. The image receiving unit 200 may have various standards such as a Digital Video Interactive (DVI), High Definition Multimedia Interface (HDMI), DisplayPort, Unified Display Interface (UDI) or Wireless high definition (HD), according to the type of the image source 20 and the display apparatus 10, the standard of the image signal outputted from the image source 20, etc.

The image processing unit 300 processes the image signal received through the image receiving unit 200 for display through the display unit 100. The image processing unit 300 processes the image signal into a plurality of horizontal scan lines per every frame and scans the horizontal scan lines from top to bottom onto the display unit 100. After completion of scanning for one frame, an image of the next frame is scanned after a given non-scan time.

The image processing unit 300 does not scan an image onto the display unit 100 during the non-scan time. In the case of a 3D image, any one of a left-eye image and a right-eye image is displayed during the non-scan time. That is, any one of a left-eye image and a right-eye image which has been scanned just before the non-scan time is displayed through the display unit 100.

The image processing unit 300 may have various components for the above operation, such as a decoding block which decodes an image signal, a scaler block which converts the image signal into size and resolution suitable for the display unit 100, a block which selectively changes a frame rate of the image signal, and a block which scans an image onto the display unit 100. These components may be provided separately or may be integrated into a single chip.

The image detection unit 400 detects the characteristic of the received image signal, that is, whether the image signal corresponds to a 2D image or a 3D image, and transmits the detection result to the controller 700. The time when the image detection unit 400 detects the characteristic of the image is not limited. For example, the image detection unit 400 may detect the characteristic of the image signal which is being processed by the image processing unit 300.

Further, the method in which the image detection unit 400 detects the image signal is not limited. For example, the image detection unit 400 may extract a horizontal synchronous signal from a received image signal and then determine whether the image signal corresponds to a 2D image or a 3D image based on the frequency of the horizontal synchronous signal. For example, it may be determined that if the frequency of the horizontal synchronous signal is equal to or higher than a given value, the image signal corresponds to a 3D image; and if the frequency of the horizontal synchronous signal is lower than the given value, the image signal corresponds to a 2D image.

This determination is based on the fact that the frequency of the horizontal synchronous signal in the case of a 3D image is set higher than the frequency of the horizontal synchronous signal in the case of a 2D image. In this respect, the given value is not limited to a specific value, but may be set into a variety of values in a manufacturing process.

The non-scan time in the case of a 3D image may be set longer than the non-scan time in the case of a 2D image, thereby securing a selective opening time of the shutter glass unit 30. In this case, since a scan time decreases according as the non-scan time increases, the frequency of the horizontal synchronous signal relatively increases to form all the scanning lines during the decreased scan time. Accordingly, the frequency of the horizontal synchronous signal in the case of a 3D image becomes higher than the frequency thereof in the case of a 2D image, which may be detected by the image detection unit 400.

The above embodiment is only exemplary, and thus, the characteristic of the image signal may be detected in a different method. For example, the controller 700 may determine the characteristic of the image signal based on characteristic information transmitted with the image signal from the image source 20.

That is, the image source 20 transmits the image signal and information about whether the image signal corresponds to a 2D image or a 3D image to the image receiving unit 200; and then the controller 700 may read the received information to determine whether the image signal corresponds to a 2D image or a 3D image. In this respect, the information may be transmitted being included in the image signal, or may be transmitted through a control signal communication channel such as a Display Data Channel (DDC) provided between the image source 20 and the image receiving unit 200.

In this respect, the method in which the image source 20 generates the characteristic information is not limited. For example, the information may be generated by the image source 20 when the image source 20 generates an image signal, or may be set through an application program driven in the image source 20 by a user.

The synchronous signal communication unit 500 transmits to the shutter glass unit 30, if the input image signal corresponds to a 3D image, a synchronous signal corresponding to a period that the image processing unit 300 performs scanning and non-scanning onto the display unit 100, that is, a display period of a 3D image to be displayed through the display unit 100. The synchronous signal may be generated by the controller 700, or by any other component separately provided for generating the synchronous signal.

The synchronous signal communication unit 500 transmits the synchronous signal to the synchronous signal receiving part 35 of the shutter glass unit 30 through wired or wireless communication. The wireless communication may be realized by an infrared ray or Radio Frequency (RF) signal, or the like.

The synchronous signal according to the present exemplary embodiment includes two signals corresponding to a left-eye image and a right-eye image. The synchronous signal corresponding to a left-eye image has a characteristic of 'low' while an image is scanned and a right-eye image is displayed, and has a characteristic of 'high' while a left-eye image is displayed. Contrarily, the synchronous signal corresponding to a right-eye image has a characteristic of 'low' while an image is scanned and a left-eye image is displayed, and has a characteristic of 'high' while a right-eye image is displayed.

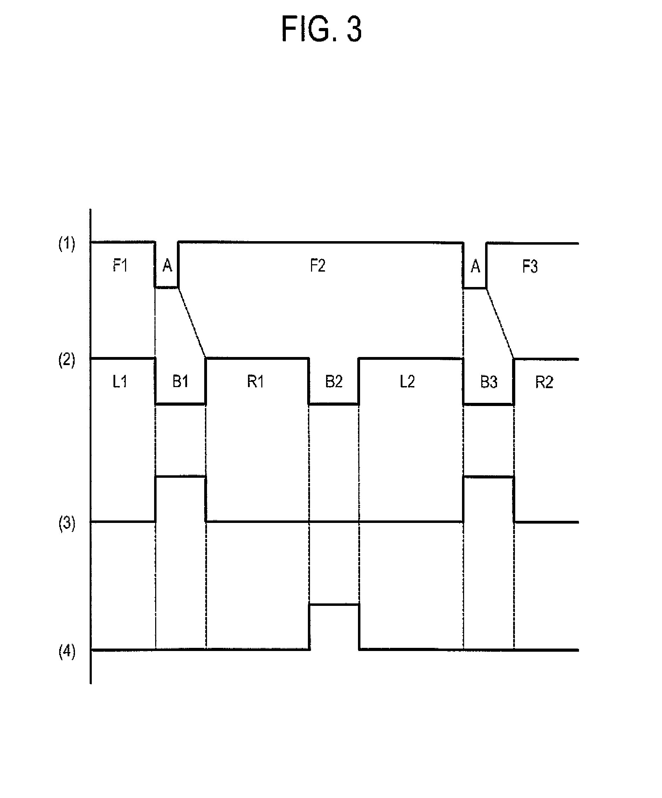

Hereinafter, the scan and non-scan period of the image and the synchronous signal corresponding to a 3D image will be described in more detail with reference to FIG. 3, which shows graphs representing duty ratios of a vertical synchronous signal for an image to be displayed and a synchronous signal for selectively opening and closing the left eye part 31 and the right eye part 33 of the shutter glass unit 30. In FIG. 3, the horizontal axes of the respective graphs refer to time.

Graph (1) represents a vertical synchronous signal in the case that the image to be displayed is a 2D image. Sections F1, F2 and F3 of graph (1) are scan sections in which the image is continuously scanned onto the display unit 100 in a frame unit. Sections A between the sections F1, F2 and F3 are non-scan sections in which the image is not scanned.

Graph (2) represents a vertical synchronous signal in the case that the image to be displayed is a 3D image. In sections L1, R1, L2 and R2 of graph (2), the image is scanned onto the display unit 100 in the frame unit. Sections B1, B2 and B3 are non-scan sections. Here, a left-eye image and a right-eye image of a 3D image are alternately scanned. That is, in the sections L1 and L2, a left-eye image is scanned; and in the sections R1 and R2, a right-eye image is scanned. Further, in the section B1, the left-eye image scanned in the section L1 is displayed; in the section B2, the right-eye image scanned in the section R1 is displayed; and in the section B3, the left-eye image scanned in the section L2. As a result, in the whole scan and non-scan sections, the left-eye image and the right-eye image are displayed being mixed each other.

Graphs (3) and (4) represent synchronous signals each corresponding to a left-eye image and a right-eye image in the case that a 3D image is displayed as shown in graph (2). Here, graph (3) shows a characteristic of 'high' in the sections B1 and B3 in which a left-eye image is displayed; and graph (4) shows a characteristic of 'high' in the section B2 in which a right-eye image is displayed.

If the synchronous signals are received through the synchronous signal receiving unit 35 from the synchronous signal communication unit 500, the shutter controller 37 opens and closes the left eye part 31 and the right eye part 33 based on the synchronous signals. That is, the shutter controller 37 opens the left eye part 31 in the sections B1 and B3 except the other sections, and opens the right eye part 33 in the section B2 except the other sections.

In this respect, in the case of a 3D image, due to the above-described operation of the shutter glass unit 30, sections blocking a user's view occur. Thus, the user perceives that the brightness level of a 3D image is lower than that of a 2D image in which the user's view is not blocked. That is, according as the characteristic of the displayed image is changed, the brightness level which is perceived by the user sharply increases and decreases.

To address the above problem, the controller 700 may store a first brightness level for a 2D image and a second brightness level for a 3D image. The first and second brightness levels may be set into a variety of values according to the characteristic of an image signal, user's preference, etc., and thus, are not limited to a specific value. However, the first brightness level should be lower than the second brightness level considering that the brightness level of a 3D image which is perceived by a user is lower than that of a 2D image.

The controller 700 receives the characteristic of an image signal from the image detection unit 400 and selects any one of the first and second brightness levels corresponding to the received characteristic to display an image at the selected brightness level. If the characteristic of an image signal received through the image receiving unit 200 are changed, the image detection unit 400 detects the changed characteristic for transmission to the controller 700. Then, the controller 700 controls to display an image at the brightness level corresponding to the changed characteristic.

In this way, the brightness level of a 3D image is adjusted to compensate for decrease in the brightness level at a user side so that the brightness levels of a 2D image and a 3D image at the user side may be equal or similar to each other.

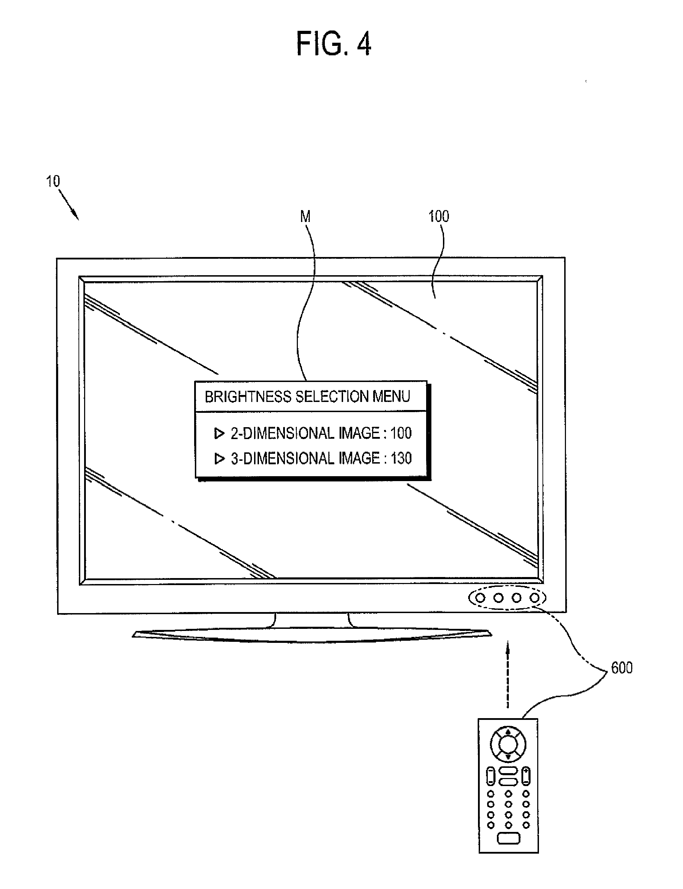

The first and second brightness levels may be preset in the process of manufacturing the display apparatus 10, or may be selected by a user. FIG. 4 schematically illustrates a process of selecting the first and second brightness levels by a user.

As shown in FIG. 4, if a user performs a given input through the user input unit 600 such as a menu key or a remote controller, the controller 700 controls the image processing unit 300 to display a menu M for selection of a brightness level through the display unit 100. The menu M may be displayed through an On Screen Display (OSD), a pop-up, or the like.

The menu M is provided to select the first brightness level for a 2D image and the second brightness level for a 3D image, respectively. For the convenience of description, the unit of the brightness levels in FIG. 4 is omitted, but may have the unit of candela (CD), or may be represented by an image such as a gauge bar, patterns, symbols or graphs. Alternatively, the menu M may be provided to select any one of the first and second brightness levels.

The controller 700 stores the brightness levels selected through the menu M, and may select the brightness level corresponding to the image characteristic detected by the image detection unit 400.

In this respect, as the second brightness level is higher than the first brightness level as described above, it is preferable but not necessary that the range of the second brightness level for selection is higher than the range of the first brightness level for selection.

Further, it is preferable but not necessary that the second brightness level in an initial state of the menu M is higher than the first brightness level therein so that the user can select whether to adjust the second brightness level according to the user's preference.

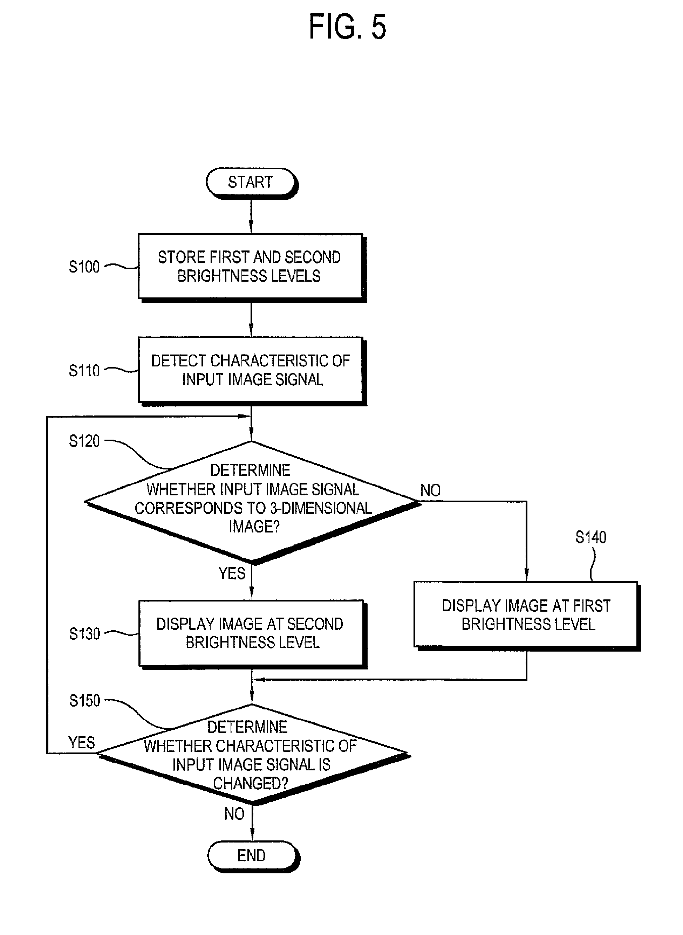

Hereinafter, a process of displaying an image at a brightness level corresponding to the characteristic of an input image signal will be described with reference to FIG. 5, which is a flowchart illustrating a control method of a display apparatus according to an exemplary embodiment of the present invention.

As shown in FIG. 5, if first and second brightness levels are selected by a user, the controller 700 stores the selected brightness levels (S100).

If an image signal from the image source 20 is received through the image receiving unit 200, the image detection unit 400 detects the characteristic of the image signal (S110).

The controller 700 confirms whether the received image signal corresponds to a 3D image (S120). If it is confirmed that the image signal corresponds to a 3D image, the controller 700 controls to display an image at the second brightness level (S130). Contrarily, if it is confirmed that the image signal corresponds to a 2D image, the controller 700 controls to display an image at the first brightness level (S140).

The image detection unit 400 detects the input image signal in real time or periodically, and then, the controller 700 confirms whether the characteristic of the image signal is changed (S150) and controls to display an image at the brightness level corresponding to the confirmation result.

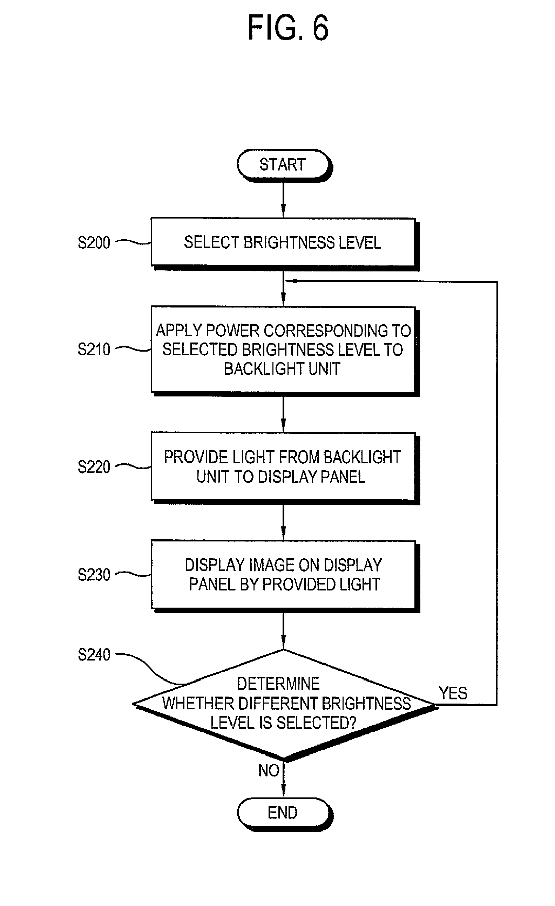

Hereinafter, operations S130 and S140 for displaying an image at a selected brightness level will be described in more detail with reference to FIG. 6.

As shown in FIG. 6, the controller 700 selects any one of the first and second brightness levels corresponding to the characteristic of the image signal detected by the image detection unit 400 (S200).

Then, power corresponding to the selected brightness level is applied to the backlight unit 120 under the control of the controller 700 (S210). Light generated by the applied power is provided to the display panel 110 from the backlight unit 120 (S220) to then display an image on the display panel 110 (S230). The intensity or amount of the light provided to the display panel 110 may be adjusted by adjusting the level of the power applied to the backlight unit 120, to thereby adjust the brightness level of the image.

If the characteristic of the image signal is changed, the controller 700 selects the different brightness level (S240), and controls the intensity or amount of the light provided to the backlight unit 120 to adjust the brightness level of the image.

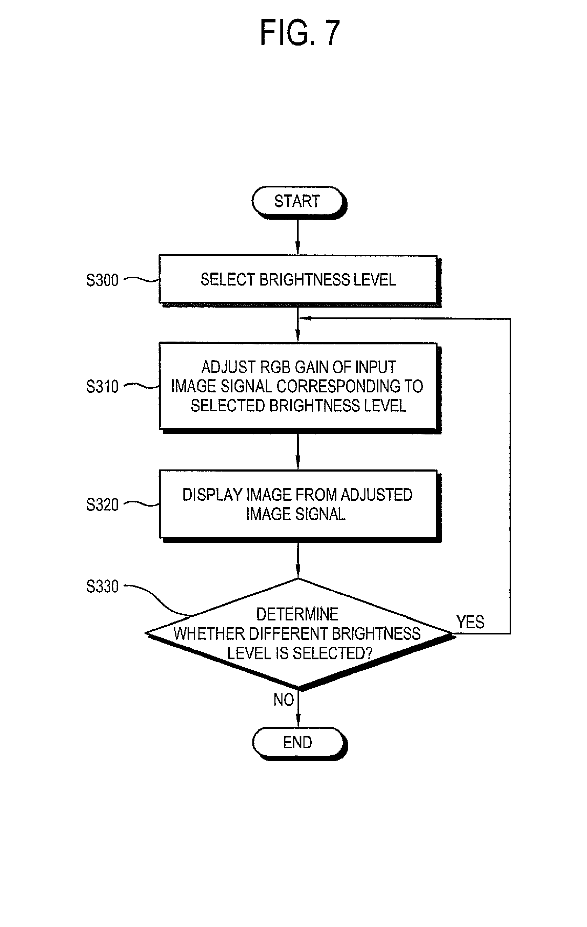

Hereinafter, another process of displaying an image at a brightness level selected by the controller 700 will be described with reference to FIG. 7.

As shown in FIG. 7, the controller 700 selects any one of the first and second brightness levels corresponding to the characteristic of the image signal detected by the image detection unit 400 (S300).

The image processing unit 300 processes the image signal into RGB data, and the controller 700 adjusts a gain of the RGB data of the image signal corresponding to the selected brightness level (S310). The adjusted image signal is processed for display through the display unit 100 at the selected brightness level according to the adjusted RGB gain (S320).

If the characteristic of the image signal is changed, the controller 700 selects the different brightness level (S330), and adjusts the RGB gain of the image signal to adjust the brightness level of the image.

Although a few exemplary embodiments of the present invention have been shown and described, it will be appreciated by those skilled in the art that changes may be made in these embodiments without departing from the principles of the invention, the scope of which is defined in the appended claims.

## Claims

1. A display system comprising:
shutter glasses (30) for selectively opening or closing a left eye part or a right eye part in synchronization with a display period of an image in a case that the image is a 3D image, and
a display apparatus (10), comprising:
an image receiving unit (200), which receives an image signal corresponding with the image from an external source (20);
a controller (700), which determines whether the image signal corresponds to a two-dimensional (2D) image or a three-dimensional (3D) image, and adjusts, if it is determined that the image signal corresponds to the 3D image, a brightness level of an image to be displayed according to the image signal differently from a brightness level corresponding to the 2D image,
wherein the controller (700) controls the display unit (100) to display a menu through which at least one of the brightness level corresponding to the 2D image and the brightness level corresponding to the 3D image can be selected.

2. The display system according to claim 1, wherein the brightness level of the image to be displayed is a brightness level corresponding to the 3D image, and
wherein the brightness level corresponding to the 3D image is set higher than the brightness level corresponding to the 2-dimensional image.

3. The display system according to claim 1, wherein the brightness level of the image to be displayed is a brightness level corresponding to the 3D image, and
wherein the controller (700) stores a brightness level selected through the menu.

4. The display system according to any one of claims 1 to 3, wherein the display unit (100) comprises a display panel (110) and a backlight unit (120), which provides light for displaying the image on the display panel (110), and
wherein the controller (700) controls the backlight unit (120) to adjust an intensity or amount of the light corresponding to the adjusted brightness level.

5. The display system according to any one of claims 1 to 5, wherein the controller (700) adjusts a red-green-blue (RGB) gain of the image signal corresponding to the adjusted brightness level, and controls the image processing unit (300) to process the image signal according to the adjusted brightness level.

6. A method of controlling a display system, comprising:
displaying a menu through which at least one of the brightness level corresponding to a 2D image and the brightness level corresponding to a 3D image can be selected;
controlling shutter glasses for selectively opening or closing a left eye part or a right eye part in synchronization with a display period of the image in a case that the image is the 3D image,
processing an input image signal corresponding with the image for display;
determining whether the image signal corresponds to a two-dimensional (2D) image or a three-dimensional (3D) image;
adjusting, if the image signal corresponds to the 3D image, a brightness level of an image to be displayed according to the image signal differently from a brightness level corresponding to the 2D image.

7. The method according to claim 6, wherein the brightness level of the image to be displayed is a brightness level corresponding to the 3D image, the method further comprising:
storing the brightness level corresponding to the 3D image set higher than the brightness level corresponding to the 2D image.

8. The method according to claim 6, wherein the displaying comprises
storing a brightness level selected through the menu.

9. The method according to any one of claims 6 to 8, wherein the adjusting comprises:
providing light from a backlight unit to a display panel on which the image is to be displayed; and
adjusting an intensity or amount of the provided light corresponding to the adjusted brightness level.

10. The method according to any one of claims 6 to 8, wherein the adjusting comprises:
adjusting a red-green-blue (RGB) gain of the image signal corresponding to the adjusted brightness level; and
displaying the image according to the adjusted brightness level.
